# EUROPEAN PATENT SPECIFICATION

(11) **EP 0 340 192 B1**
(45) Date of publication and mention of the grant of the patent: **02.03.1994**
(21) Application number: 89850132.5
(22) Date of filing: 26.04.1989
(51) Int. Cl.: D21G 1/02, F16C 13/00

(54) **Loading shoe for a variable-crown roll and a variable-crown roll provided with loading shoes**
Stützelement für Druckausgleichswalze und eine Druckausgleichswalze mit Stützelementen
Elément d'appui pour cylindre à flexion compensée et cylindre à flexion compensée comprenant des éléments d'appui

(30) Priority: 27.04.1988 FI 881974
(43) Date of publication of application: 02.11.1989
(73) Proprietor: VALMET PAPER MACHINERY INC., 00130 Helsinki (FI)
(72) Inventor: Niskanen, Juhani, SF-90460 Oulunsalo (FI)
(74) Representative: Wallin, Bo-Göran

(56) References cited:
- DE-A- 3 011 669
- DE-A- 3 704 090

## Description

The invention concerns a loading shoe for a variable-crown roll, which comprises a stationary roll axle, on which the roll mantle is arranged revolving, said mantle being supported in the direction of pressing on the roll axle by means of loading shoes acting upon the inner face of the roll mantle, said loading shoes being loaded against the inner face of the roll mantle by means of pressure fluid.

The invention further concerns a variable-crown roll provided with loading shoes, comprising a stationary roll axle, on which the roll mantle is arranged revolving, said mantle being supported in the direction of pressing on the roll axle by means of loading shoes acting upon the inner face of the roll mantle, said loading shoes being loaded towards the inner face of the roll mantle by means of pressure fluid.

In paper machines, rolls are commonly used that form a dewatering press nip, a smoothing nip, or a calendering nip together with the counter-roll. In these applications it is important that the distribution of the linear load in the nip, i.e. the profile, in the axial direction of the rolls can be made invariable or that this profile can be adjusted as desired, e.g., so as to control the transverse moisture profile and/or thickness profile (caliper) of the web. Also, for example, in supercalenders it is important to be able to regulate the calendering nip in the axial direction of the calender rolls so that the transverse thickness profile of the web becomes as desired. For this purpose, in prior art, a number of different variable-crown or adjustable-crown rolls (in the following the term variable-crown roll will be used for both of them) are known by means of which attempts are made to act upon the distribution of the linear load in a nip.

In prior art, several different variable-crown rolls of a paper machine and, e.g., of a supercalender are known, see DE-A-37 04 090 which shows the known features of the preambles of independent Claims 1 and 6. As a rule, these rolls comprise a massive or tubular, stationary roll axle and a roll mantle arranged revolving around the axle. Between said axle and the mantle, arrangements of glide shoes or loading shoes and/or a chamber of pressure fluid or a series of chambers, acting upon the inner face of the mantle, are arranged so that the axial profile of the mantle at the nip can be aligned or adjusted as desired.

In a variable-crown roll provided with loading shoes, the axial profile of the mantle is adjusted so that loading pistons placed underneath the loading shoes, which said pistons are supported in cylinder bores formed into the axle as transverse to the axle, are loaded by means of pressure fluid, whereby the loading shoes are supported against the inner face of the roll mantle with a force of desired magnitude so as to adjust the axial profile of the roll mantle. In order that the loading shoe should not be in direct contact with the inner face of the roll mantle, a fluid film is arranged between the loading shoe and the roll mantle by passing fluid through the loading shoe into "pockets" provided in the outer face of the shoe. Moreover, in many cases, the roll mantle is heated or cooled by spraying fluid onto the inner face of the roll mantle. Thus, in the interior of the roll, there is often quite a large amount of fluid. However, in view of minimization of the power consumption, the roll should be kept as empty as possible. This is why fluid is removed from the interior of the roll, e.g., by means of a doctor through the roll end. The opening for the removal of fluid is usually provided at one end or at both ends of the roll. Moreover, larger rolls may have several fluid collecting points in the axial direction of the roll, from which said points the fluid is passed to the outlet opening. Even if fluid were removed from the interior of the roll by means of a doctor, between the loading shoes, however, a thick layer of fluid remains, which causes losses of power and mixing of air with the fluid. This loss of power is mainly caused by the circumstance that the fluid circulating on the inner face of the roll mantle collides against the front edges, i.e. the front faces of the loading shoes.

The object of the present invention is to provide a loading shoe for a variable-crown roll as well as a variable-crown roll provided with such loading shoes by means of which the drawbacks involved in the prior-art solutions are avoided and by means of which an essential improvement is obtained over prior art. More specifically, the object of the invention is such a loading shoe and such a variable-crown roll provided with loading shoes by means of which the loss of power in the roll can be made essentially lower.

In view of achieving the objectives stated above and those that will come out later, the loading shoe in accordance with the invention is characterized in that the front face of the loading shoe that is placed facing the direction of rotation of the roll mantle is shaped in such a way that, when the fluid flow running on the inner face of the roll mantle collides against the loading shoe, said front face of the loading shoe is arranged to guide the fluid flow so as to by-pass the loading shoe from the desired side.

On the other hand, the variable-crown roll in accordance with the invention is characterized in that the loading shoes are shaped so that they guide the fluid flow running on the inner face of the roll mantle to the side in the axial direction of the roll, so that the loading shoes are arranged to guide said fluid flow towards a fluid drain opening provided in the roll or towards a drain-fluid collecting point or equivalent.

Of the advantages of the present invention over prior-art solutions, e.g., the following should be stated. In the invention, the loading shoe is shaped so that, when the fluid that circulates on the inner face of the roll mantle collides against the shoe, the fluid is guided smoothly past the loading shoe from the desired side. Moreover, in a roll in accordance with the invention, the loading shoes are arranged so that the fluid can be guided from the shoes in the desired direction, e.g. toward a drain opening, as a result of which the emptying of the roll of fluid is more efficient and the power losses in the roll are lower than in prior art. Further embodiments of the invention are defined in dependent claims 2 to 5 and 7 to 9. The other advantages and characteristic features of the invention come out from the following detailed description of the invention.

Figure 1 shows a roll in accordance with the invention as viewed in the direction of the nip and with the roll mantle in section.

Figure 2 is a schematical top view of an embodiment of a loading shoe in accordance with the invention.

Figure 3 shows an alternative embodiment of a loading shoe in accordance with the invention as an illustration corresponding to Fig. 2.

Figure 4 is a schematical side view of a loading shoe in accordance with an embodiment of the invention.

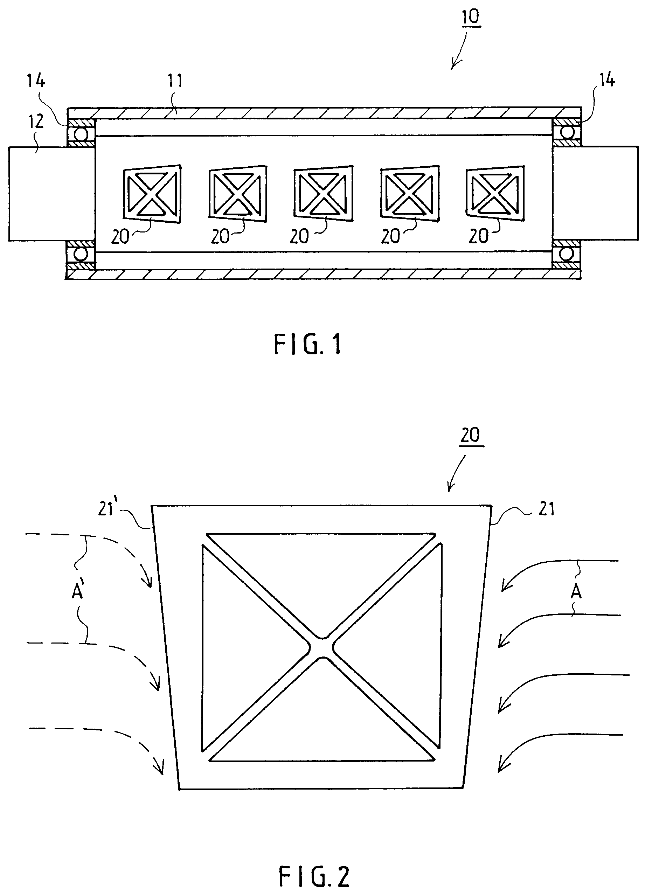

In the figures in the drawing, the variable-crown roll is denoted generally with the reference numeral 10. The roll 10 comprises a stationary roll axle 12, on which the roll mantle 11 is arranged revolving. In the direction of pressing, i.e. in the direction of the nip, the roll mantle 11 is supported on the roll axle 12 by means of loading shoes 20,30, the loading pistons 5 placed underneath said loading shoes being loaded in the conventional way by means of pressure fluid so as to produce the desired force between the loading shoes 20,30 and the roll mantle 11. Moreover, the roll mantle 11 may be journalled at its ends on the roll axle 12, e.g., by means of the end bearings 14 shown in Fig. 1.

Fig. 2 is a schematical illustration of an alternative embodiment of a loading shoe in accordance with the invention, which is, in this figure, denoted with the reference numeral 20. Differing from the conventional solutions, the front face 21 at the front edge of the loading shoe 20, and the front face 21′ at the rear edge of the shoe, respectively, are shaped as diagonal in relation to the axial direction of the roll so that said diagonal front faces 21 and 21′ guide the fluid flow A,A′ colliding against the loading shoe 20 smoothly past the loading shoe 20 from the desired side. In the embodiment of Fig. 2, both of the front faces 21 and 21′ of the loading shoe 20 are shaped diagonal relative the axial direction, whereby the loading shoe 20 guides the fluid flow A or A′ past the loading shoe 20 irrespective of the direction of rotation of the roll. Moreover, in the example of Fig. 2, the front faces 21 and 21′ are arranged diagonal in such a way that, irrespective of the direction of rotation, the loading shoe 20 always guides the fluid flow A or A′ in the same direction. However, of course, it is evident that, if desired, it is possible to provide only one of the front faces 21 or 21′ with a diagonal shape of said sort if the roll is supposed to revolve always in the same direction.

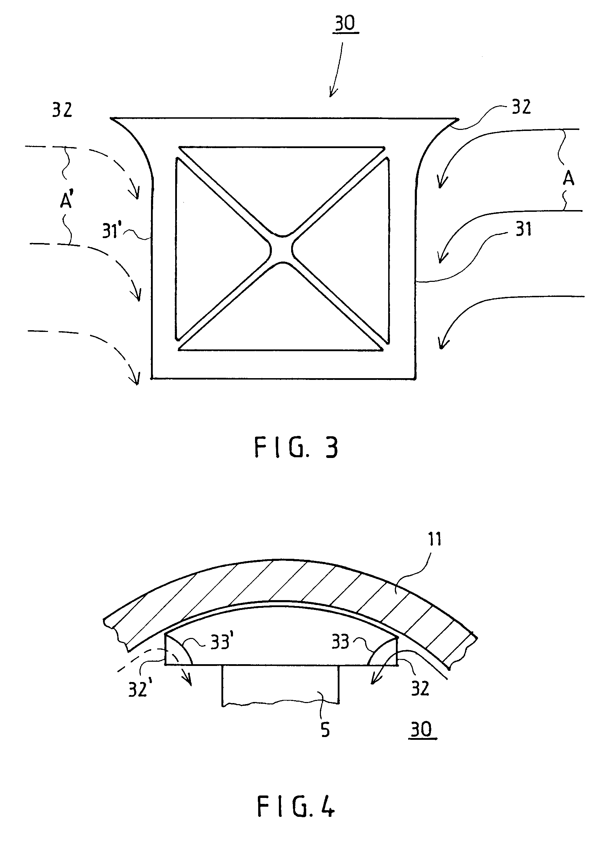

Fig. 3 shows an alternative embodiment of a loading shoe in accordance with the invention, which is, in this figure, denoted generally with the reference numeral 30. In the exemplifying embodiment of Fig. 3, both at the front edge and at the rear edge, at one end in the axial direction, portions 32 and 32′ of curved shape have been formed, from which the front faces 31 and 31′ of the loading shoe extend in the axial direction of the roll to the opposite end of the loading shoe as substantially parallel to the roll axle. Said portions 32 and 32′ of curved shape, thus, divert the fluid flow A or A′ colliding against the loading shoe 30 smoothly to the side and along the front face 31 or 31′ past the loading shoe 30. In the embodiment of Fig. 3, the curved portions 32 and 32′ that guide the fluid flow A or A′ have also been formed both at the front edge and at the rear edge of the loading shoe 30, so that the loading shoe 30 guides the fluid in the same direction irrespective of the direction of rotation of the roll. It is also correct in respect of the exemplifying embodiment of Fig. 3 that, if desired, the fluid guide face may be provided at the front edge or at the rear edge of the loading shoe 30 only, as was already described in connection with Fig. 2.

When a roll 10 in accordance with the invention is provided with loading shoes 20 or 30 that guide the fluid flow A or A′ to the side, a minor drawback resulting from this solution may be that the fluid flow guided by the loading shoe to the side collides against the side face of the adjoining loading shoe. In this respect, an additional improvement is, however, described schematically in Fig. 4, which is a side view of a loading shoe 30. In the solution in accordance with this exemplifying embodiment, a guide face 33,33′ of different direction is additionally provided at the front edge or rear edge, or both of them, of the loading shoe 30, which said guide face 33,33′ guides the fluid flow that collides against the loading shoe 30 additionally towards the centre of the roll, whereby the fluid flow, which is guided by the loading shoe 30 both in the axial direction to the side and in the radial direction towards the interior of the roll, does not collide against the adjoining loading shoe, but is carried underneath said loading shoe.

When a variable-crown roll 10 in accordance with Fig. 1 is provided, e.g., with loading shoes 20,30 in accordance with Figs. 2,3 or 4, the loading shoes are arranged in the roll 10 as follows. If the roll 10 is such that the fluid-drain opening or fluid-collecting point is formed at one end of the roll only, the loading shoes 20,30 are arranged in the roll 10 so that all the loading shoes 20,30 guide the fluid in the same direction towards said drain opening or collecting point. Fig. 1 attempts to illustrate a case of this very sort, wherein loading shoes 20 in accordance with Fig. 2 are used in the roll 10, all of which guide the fluid to the left end of the roll 10 in Fig. 1. The fluid-drain openings may, however, be arranged at both ends of the roll 10, and in such a case it is, of course, advantageous to arrange the loading shoes 20,30 so that at one side of the centre line of the roll the fluid is guided to said side of the centre line, and at the opposite side of the centre line to the opposite end. In a third embodiment, several fluid-collecting points may be provided in the axial direction of the roll, through which the fluid is again passed to the drain opening or drain openings. In such an embodiment, the loading shoes 20,30 in accordance with the invention are grouped so that a certain proportion of the loading shoes 20,30 guide the fluid flow to a certain collecting point.

Above, the invention has been described by way of example with reference to the figures in the accompanying drawing. This is, however, not supposed to confine the invention to the exemplifying embodiments shown in the figures alone, but many variations are possible within the scope of the inventive idea defined in the accompanying patent claims.

## Claims

1. Loading shoe for a variable-crown roll, which comprises a stationary roll axle (12), on which the roll mantle (11) is arranged revolving, said mantle being supported in the direction of pressing on the roll axle (12) by means of loading shoes (20,30) acting upon the inner face of the roll mantle (11), said loading shoes being loaded against the inner face of the roll mantle (11) by means of pressure fluid, **characterized** in that the front face (21;31,32) of the loading shoe (20,30) that is placed facing the direction of rotation of the roll mantle (10) is shaped in such a way that, when the fluid flow (A) running on the inner face of the roll mantle (11) collides against the loading shoe (20,30), said front face (21,31,32) of the loading shoe is arranged to guide the fluid flow (A) so as to by-pass the loading shoe (20,30) from the desired side.

2. Loading shoe as claimed in claim 1, **characterized** in that the front faces (21,21′;31,32,31′,32′) both at the front edge and at the rear edge of the loading shoe (20,30) are shaped so that they guide the fluid flow (A;A′) to the side.

3. Loading shoe as claimed in claim 1 or 2, **characterized** in that the guiding of the fluid flow (A;A′) by the loading shoe (20) is provided by arranging the front face (21;21′) of the loading shoe (20) diagonal relative the axis of the roll (10).

4. Loading shoe as claimed in claim 1 or 2, **characterized** in that a guide portion (32,32′) of curved shape has been formed on the front face (31;31′) of the loading shoe (30).

5. Loading shoe as claimed in any of the preceding claims, **characterized** in that an additional guide face (33;33′) directed towards the centre of the roll (10) has been formed additionally on the front face (21,31) of the loading shoe (20,30).

6. Variable-crown roll provided with loading shoes as claimed in any of the preceding claims, comprising a stationary roll axle (12), on which the roll mantle (11) is arranged revolving, said mantle being supported in the direction of pressing on the roll axle (12) by means of loading shoes (20,30) acting upon the inner face of the roll mantle (11), said loading shoes being loaded towards the inner face of the roll mantle (11) by means of pressure fluid, **characterized** in that the loading shoes (20,30) are shaped so that they guide the fluid flow (A;A′) running on the inner face of the roll mantle (11) to the side in the axial direction of the roll (10), so that the loading shoes (20,30) are arranged to guide said fluid flow (A;A′) towards a fluid-drain opening provided in the roll (10) or towards a drain-fluid collecting point or equivalent.

7. Variable-crown roll as claimed in claim 6, **characterized** in that the fluid-drain opening is formed at one end of the roll (10) and that each loading shoe (20,30) is arranged to guide the fluid flow (A) in the same direction towards said drain opening.

8. Variable-crown roll as claimed in claim 6, **characterized** in that a fluid-drain opening is provided at each end of the roll (10) and that the loading shoes (20,30) are arranged to guide the fluid flow (A;A′) towards said drain openings in relation to the centre line of the roll.

9. Variable-crown roll as claimed in claim 6, **characterized** in that the roll (10) is provided with several drain-fluid collecting points and that the loading shoes (20,30) are grouped so that the loading shoes (20,30) placed closest to each collecting point guide the fluid flow (A;A′) towards said collecting point.

## Patentansprüche

1. Stützelement für eine Druckausgleichswalze, mit einer stationären Walzenachse (12), auf welcher der Walzenmantel (11) drehend angeordnet ist, welcher Mantel in der Richtung des Drucks auf die Walzenachse (12) mittels Stützelementen (20,30) abgestützt ist, die auf die Innenfläche des Walzenmantels (11) wirken, welche Stützelemente mittels eines Druckfluids gegen die Innenfläche des Walzenmantels (11) belastet sind, dadurch **gekennzeichnet,**
daß die Stirnfläche (21;31,32) des Stützelements (20,30), die zur Drehrichtung des Walzenmantels (10) gewandt ist, so geformt ist, daß, wenn die an der Innenfläche des Walzenmantels (11) laufende Fluidströmung (A) gegen das Stützelement (20,30) stößt, diese Stirnfläche (21,31,32) des Stützelements bewirkt, die Fluidströmung (A) zu leiten, um das Stützelement (20,30) von der gewünschten Seite zu umgehen.

2. Stützelement nach Anspruch 1, dadurch **gekennzeichnet,**
daß die Stirnflächen (21,21';31,32,31',32') sowohl am Vorderrand als auch am hinteren Rand des Stützelements (20,30) so geformt sind, daß sie die Fluidströmung (A;A') zur Seite leiten.

3. Stützelement nach Anspruch 1 oder 2, dadurch **gekennzeichnet,**
daß das Ableiten der Fluidströmung (A;A') durch das Stützelement (20) erfolgt, indem die Stirnfläche (21;21') des Stützelements (20) diagonal zur Achse der Walze (10) angeordnet ist.

4. Stützelement nach Anspruch 1 oder 2, dadurch **gekennzeichnet,**
daß ein Führungsabschnitt (32,32') gekrümmter Form an der Stirnfläche (31;31') des Stützelements (30) ausgebildet ist.

5. Stützelement nach einem der vorstehenden Ansprüche,dadurch **gekennzeichnet,**
daß eine zusätzliche zum Zentrum der Walze (10) gerichtete Führungsfläche (33;33') zusätzlich an der Stirnfläche (21,31) des Stützelements (20,30) ausgebildet ist.

6. Druckausgleichswalze mit Stützelementen nach einem der vorstehenden Ansprüche, mit einer stationären Walzenachse (12), auf welcher der Walzenmantel (11) drehend angeordnet ist, welcher Mantel in der Richtung des Drucks auf die Walzenachse (12) mittels Stützelementen (29,30) abgestützt ist, die auf die Innenfläche des Walzenmantels (11) einwirken, welche Stützelemente mittels eines Druckfluids gegen die Innenfläche des Walzenmantels (11) belastet sind, dadurch **gekennzeichnet,**
daß die Stützelemente (20,30) so geformt sind, daß sie die an der Innenfläche des Walzenmantels (11) laufende Fluidströmung (A;A') zur Seite in die Axialrichtung der Walze (10) leiten, so daß die Stützelemente (20,30) bewirken, die Fluidströmung (A;A') zu einer in der Walze (10) vorgesehenen Fluidabzugsöffnung oder zu einem Abzugsfluid- Sammelpunkt oder dergleichen zu leiten.

7. Druckausgleichswalze nach Anspruch 6, dadurch **gekennzeichnet,**
daß die Fluidabzugsöffnung an einem Ende der Walze (10) ausgebildet ist und daß jedes Stützelement (20,30) angeordnet ist, um die Fluidströmung (A) in dieselbe Richtung zur Abzugsöffnung zu leiten.

8. Druckausgleichswalze nach Anspruch 6,dadurch **gekennzeichnet,**
daß eine Fluidabzugsöffnung an jedem Ende der Walze (10) vorgesehen ist und daß die Stützelemente (20,30) angeordnet sind, um die Fluidströmung (A;A') zu diesen Abzugsöffnungen mit Bezug zur Mittenlinie der Walze zu leiten.

9. Druckausgleichswalze nach Anspruch 6,
dadurch **gekennzeichnet,**
daß die Walze (10) mit mehreren Abzugsfluid- Sammelpunkten versehen ist und daß die Stützelemente (20,30) so gruppiert sind, daß die zu jedem Sammelpunkt am nächsten gelegenen Stützelemente (20,30) die Fluidströmung (A;A') zu diesem Sammelpunkt leiten.

## Revendications

1. Elément d'appui ou semelle de charge pour un cylindre à flexion variable ou compensée, qui comprend un essieu de cylindre fixe (12) sur lequel une enveloppe de cylindre (11) est disposée de façon rotative, cette enveloppe étant supportée dans la direction de compression sur l'essieu de cylindre (12) par des éléments d'appui (20, 30), agissant sur la face interne de l'enveloppe de cylindre (11), ces éléments d'appui étant chargés ou sollicités contre la face interne de l'enveloppe du cylindre (11) au moyen d'un fluide sous pression, caractérisé en ce que la face frontale (21 ; 31, 32) de l'élément d'appui (20, 30) en opposition au sens de rotation de l'enveloppe de cylindre (10) est d'une configuration telle que lorsque le débit de fluide (A) passant sur la face interne de l'enveloppe de cylindre (11) entre en contact avec l'élément d'appui (20, 30), cette face frontale (21, 31, 32) de l'élément d'appui est disposée de façon à guider le débit de fluide (A) pour contourner l'élément d'appui (20, 30) par le côté souhaité.

2. Elément d'appui selon la revendication 1, caractérisé en ce que les faces frontales (21, 21' ; 31, 32, 31', 32'), à la fois sur le bord frontal et sur le bord arrière de l'élément d'appui (20, 30) sont de configuration telle à permettre le guidage du débit de fluide (A ; A') sur le côté.

3. Elément d'appui selon la revendication 1 ou 2, caractérisé en ce que le guidage du débit de fluide (A ; A') par l'élément d'appui (20) est assuré en disposant la face frontale (21 ; 21') de l'élément d'appui (20) diagonalement par rapport à l'axe du cylindre (10).

4. Elément d'appui selon la revendication 1 ou 2, caractérisé en ce qu'une portion de guidage courbée (32, 32') a été formée sur la face frontale (31 ; 31') de l'élément d'appui (30).

5. Elément d'appui selon l'une quelconque des revendications précédentes, caractérisé en ce qu'une face de guidage supplémentaire (33 ; 33') dirigée vers le centre du cylindre (10) a été formée de façon supplémentaire sur la face frontale (21, 31) de l'élément d'appui (20, 30).

6. Cylindre à flexion compensée muni d'éléments d'appui selon l'une quelconque des revendications précédentes, comprenant un essieu de cylindre fixe (12) sur lequel l'enveloppe de cylindre (11) est disposée de façon rotative, cette enveloppe étant supportée dans la direction de compression sur l'essieu de cylindre (12) par des éléments d'appui (20, 30) agissant sur la face interne de l'enveloppe de cylindre (11), ces éléments d'appui étant chargés ou sollicités en direction de la face interne de l'enveloppe de cylindre (11) par le fluide sous pression, caractérisé en ce que les éléments d'appui (20, 30) sont de configuration telle à guider le débit de fluide (A ; A') passant sur la face interne de l'enveloppe de cylindre (11) sur le côté dans la direction axiale du cylindre (10), de sorte que les éléments d'appui (20, 30) sont disposés pour guider le débit de fluide (A ; A') en direction d'une ouverture de vidange de fluide ménagée dans le cylindre (10) ou en direction d'un point de captation de fluide de vidange ou équivalent.

7. Cylindre à flexion compensée selon la revendication 6, caractérisé en ce que l'ouverture de vidange de fluide est ménagée sur une extrémité du cylindre (10) et en ce que chaque élément d'appui (20, 30) est disposé de façon à guider le débit de fluide (A) dans la même direction, vers l'ouverture de vidange.

8. Cylindre à flexion compensée selon la revendication 6, caractérisé en ce qu'une ouverture de vidange de fluide est ménagée sur chaque extrémité du cylindre (10) et en ce que les éléments d'appui (20, 30) sont disposés de façon à guider le débit de fluide (A ; A') vers les ouvertures de vidange par rapport à l'axe géométrique du cylindre.

9. Cylindre à flexion compensée selon la revendication 6, caractérisé en ce que le cylindre (10) est muni de plusieurs points de captation de fluide de vidange et en ce que les éléments d'appui (20, 30) sont regroupés de sorte que les éléments d'appui (20, 30) placés au plus proche de chaque point de captation guident le débit de fluide (A ; A') vers ce point de captation.
